# EUROPÄISCHE PATENTSCHRIFT

(11) **EP 1 215 022 B1**
(45) Veröffentlichungstag und Bekanntmachung des Hinweises auf die Patenterteilung: **19.07.2006**
(21) Anmeldenummer: 01811095.7
(22) Anmeldetag: 14.11.2001
(51) Int. Cl.: B29B 15/12

(54) **Verfahren zum Herstellen eines Verbundwerkstoffs aus Endlosfasern und Kunststoff**
Process for manufacturing a composite of plastics and fibres of indefinite length
Procédé pour la fabrication d'un matériau à base de fibres continues et de matière plastique

(30) Priorität: 13.12.2000 EP 00811183
(43) Veröffentlichungstag der Anmeldung: 19.06.2002
(73) Patentinhaber: Arova Schaffhausen AG, 8200 Schaffhausen (CH)
(72) Erfinder: Vodermayer, Albert Maria, 8305 Dietlikon (CH); Kärger, Jens Christian, 8405 Winterthur (CH); Auersch, Wolfram Fritz Willi, 8542 Wiesendangen (CH); Hofmeier, Markus, 8542 Winterthur (CH); Bellusci, Costantino, 8409 Winterthur (CH); Mayer, Christoph, 8405 Winterthur (CH)
(74) Vertreter: Sulzer Management AG

(56) Entgegenhaltungen:
- EP-A- 0 878 290
- WO-A-98/30374
- US-A- 5 296 064
- PATENT ABSTRACTS OF JAPAN vol. 007, no. 193 (M-238), 24. August 1983 (1983-08-24) & JP 58 094427 A (MATSUSHITA DENKO KK), 4. Juni 1983 (1983-06-04)

## Beschreibung

Die Erfindung betrifft ein Verfahren zum Herstellen eines Verbundwerkstoffs aus Endlosfasern und Kunststoff sowie eine Einrichtung zum Durchführen des Verfahrens.

Aus der EP-A- 0 937 560 ist eine Herstellung von unidirektional faserverstärkten Thermoplasten bekannt, die mit einer Druckimprägnierung eines Faserstrangs unter Verwendung einer Dispersion von Kunststoffpartikeln durchgeführt wird. Der Strang wird durch ein die Dispersion enthaltendes Bad gezogen und dabei mehrfach um zylindrische Umlenkbolzen geführt. In einem keilförmigen Bereich zwischen dem Strang und der Oberfläche des teilweise umschlungenen Umlenkbolzens werden aufgrund der Bewegung des Strangs Partikel aus der Dispersion zwischen die Fasern gepresst und dort festgehalten. Die aufgenommene Menge hängt in einer komplexen Weise von verschiedenen Parametern ab: von der Konzentration der Partikel im Bad; der Geschwindigkeit, mit der der Strang durch das Bad gezogen wird; der Anzahl Umlenkbolzen; dem Umschlingungswinkel. Es wird ein Verfahren offenbart, das bei einem besonderen Betriebspunkt (spezifische Wahl der Parameter) durchgeführt wird und das erlaubt, ohne eine Regelung eine gleich bleibende Menge an Kunststoffpartikeln auf den Faserstrang aufzubringen. Ein entsprechendes Verfahren, bei dem jedoch eine Regelung benötigt wird, ist aus der DE-A- 41 21 915 bekannt. Nachteil des Imprägnierungsverfahrens ohne Regelung ist, dass für das Einstellen des besonderen Betriebspunkts aufwändige Vorversuche durchzuführen sind, um die Werte für die genannten Parameter finden zu können.

Aus der US-A- 5 296 064 und der WO 98/30374 sind weitere Imprägnierungsverfahren bekannt, bei denen Imprägnierungspartikel pulverförmig bzw. als Suspension und ohne Verwendung von Umlenkbolzen zwischen die Fasern eingebracht werden.

Um eine gute Qualität des Verbundwerkstoffs zu erhalten, muss ein mittlerer Durchmesser der Kunststoffpartikel kleiner als ein Maximaldurchmesser sein, der angenähert gleich gross wie der Durchmesser der Fasern oder auch etwas grösser ist. Ein mittlerer Durchmesser wird bezüglich einer Grössenverteilung definiert, beispielsweise als "Median 50 - Wert". Eine auf das Volumen bezogene Verteilung kann durch eine Teilchengrössenanalyse unter Verwendung einer Sedimentationszelle bestimmt werden. Weisen die Fasern verschiedene Durchmesser auf, so werden mit Vorteil Kunststoffpartikel verwendet, deren mittlerer Durchmesser kleiner als der feinste Faserdurchmesser ist.

Statt Fasersträngen können auch Gewebe oder andere textile Anordnungen solcher Faserstränge, z. B. Geflechte, einer Druckimprägnierung unterzogen werden. Je nach Gewebe kann eine ungünstige Einwirkung der Umlenkbolzen dazu führen, dass sich in den textilen Anordnungen unregelmässige Verschiebungen zwischen den Fäden, d.h. den Fasersträngen, ergeben. Diese Verschiebungen haben unbrauchbare Produkte zur Folge. Ausserdem lassen sich die Fäden des Gewebes noch weniger gut mit gleich bleibenden Mengen an Kunststoffpartikeln imprägnieren, als das bei den nicht verwobenen Fasersträngen der Fall ist.

Aufgabe der Erfindung ist es, ein Verfahren zum Herstellen eines Verbundwerkstoffs zu schaffen, bei dem die genannten, mit einer Imprägnierung zusammenhängenden Nachteile nicht auftreten. Diese Aufgabe wird durch das im Anspruch 1 definierte Verfahren gelöst.

Das Verfahren betrifft die Herstellung eines Verbundwerkstoffs aus Endlosfasern und Kunststoff. Die Fasern liegen als eine unidirektionale Faseranordnung vor oder in Form von strangartigen, mehrfaserigen Fäden, wobei diese Fäden eine textile Fadenanordnung, insbesondere ein Gewebe oder Geflecht bilden. Die Fasern werden in eine Kunststoffmatrix eingebettet, zu deren Herstellung ein Polymer oder verschiedene Polymere vorgesehen sind. Die Faser- oder Fadenanordnung wird von einer Vorratsstelle, insbesondere einer Vorratsspule abgezogen und mit Partikeln aus Kunststoff imprägniert, wobei anschliessend zumindest ein Teil der Partikel zu der Matrix umgeschmolzen wird. Ein mittlerer Durchmesser der Partikel ist nicht wesentlich grösser als der Durchmesser der Fasern. Die Faser- oder Fadenanordnung wird ohne Umlenkelemente und in einer Ebene geführt transportiert. Die Partikel werden in einer Flüssigkeit suspendiert auf die Faser- oder Fadenanordnung aufgesprüht und - in einem Trocknungsschritt vor dem Umschmelzen - wird die Flüssigkeit der aufgesprühten Suspension mittels Abdampfen entfernt.

Die abhängigen Ansprüche 2 bis 7 betreffen vorteilhafte Ausführungsformen des erfindungsgemässen Verfahrens. Der Anspruch 8 bezieht sich auf eine Einrichtung zum Durchführen des erfindungsgemässen Verfahrens.

Nachfolgend wird die Erfindung anhand der Zeichnungen erläutert. Es zeigen:
- Fig. 1: ein Gewebe mit Fäden, die Faserstränge sind,
- Fig. 2: eine schematische Darstellung einer Einrichtung, mit der das erfindungsgemässe Verfahren durchführbar ist, und
- Fig. 3: ausschnittsweise einen Querschnitt eines Faserstrangs.

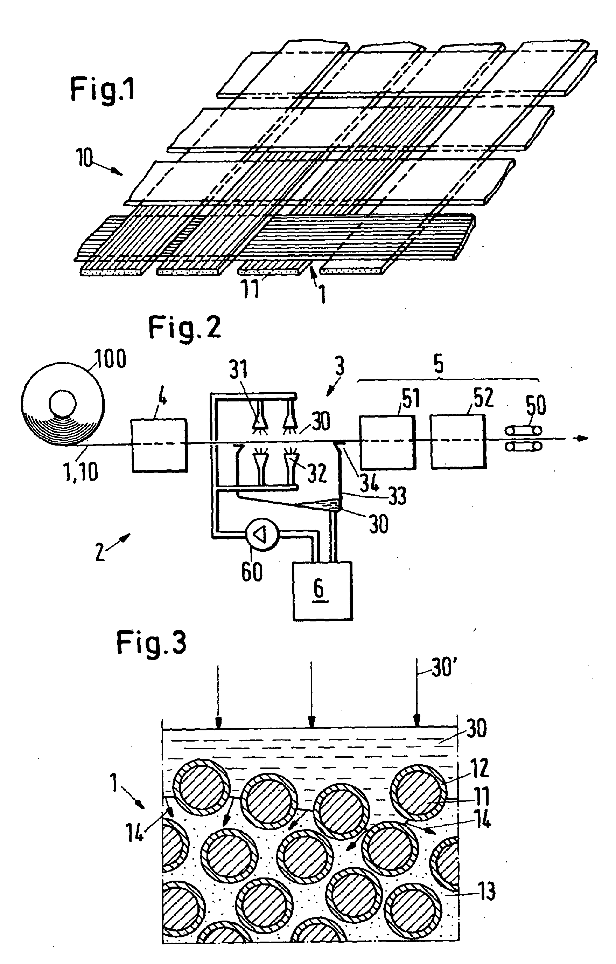

Das in Fig. 1 gezeigte Gewebe 10 setzt sich aus Fäden 1 zusammen, die Stränge von unidirektional angeordneten Endlosfasern 11 sind. Dieses Gewebe 10, eine andere textile Fadenanordnung oder eine unverwobene Faseranordnung 1 kann in einer Einrichtung 2 gemäss Fig. 2 nach dem erfindungsgemässen Verfahren behandelt werden.

Die Faser- oder Fadenanordnung 1, 10 wird von einer Vorratsspule 100 (oder Vorratsstelle) abgezogen und in der Einrichtung 2 unter Anwendung diverser Verfahrensschritte behandelt. Der Transport, bei dem die Faser- oder Fadenanordnung 1, 10 in einer Ebene geführt wird, findet ohne Umlenkelemente statt, so dass bei der Behandlung einer textilen Anordnung sich in dieser keine unregelmässigen Verschiebungen der Fäden ergeben.

Die Imprägnierung wird nicht mehr in einem Bad vorgenommen, sondern in einer Aufsprüheinrichtung 3 mittels Düsen 31, 32, mit denen eine die Kunstoffpartikel enthaltende Suspension 30 auf die Faser- oder Fadenanordnung 1, 10 aufgesprüht wird. Die Faser- oder Fadenanordnung 1, 10 wird im gezeigten Beispiel horizontal transportiert; die Suspension 30 wird dabei von oben mit den Düsen 31 und von unten mit den Düsen 32 besprüht. Möglich ist auch, aber weniger vorteilhaft, nur von oben oder nur von unten aufzusprühen. Suspension 30, die von der Faser- oder Fadenanordnung 1, 10 nicht aufgefangen oder gehalten wird, wird in einer Wanne 33 gesammelt und von dort in ein Reservoir 6 geleitet. Aus diesem Reservoir 6 fördert eine Pumpe 60 kontinuierlich Suspension 30 in die Düsen 31 und 32. Die oberen Ränder 34 der Wanne 33 können als Führungselemente für die Faser- oder Fadenanordnung 1, 10 ausgebildet sein. Anschliessend an die Besprühung wird die Behandlung unter Anwendung bekannter Verfahrensschritte in einer Teileinrichtung 5 weitergeführt. In einem Trocknungsschritt, durchgeführt in einem ersten Ofen 51, einem Tunnelofen, wird die Flüssigkeit der aufgesprühten Suspension - in der Regel Wasser - durch Abdampfen entfernt. In einem zweiten Ofen 52 wird zumindest ein Teil der aufgenommenen Kunststoffpartikel zu der Matrix des herzustellenden Verbundwerkstoffs umgeschmolzen. Mittels einer Fördereinrichtung 50 wird die Faser- oder Fadenanordnung 1, 10 durch die Einrichtung 2 durchgezogen.

Bei diesem erfindungsgemässen Verfahren ist im Gegensatz zu den vorbekannten Verfahren genau bestimmbar, wieviel Kunststoff aufgetragen wird, wenn die Menge an aufgesprühter und auf der Faser- oder Fadenanordnung 1, 10 gehaltenen Suspension 30 gemessen wird. Es ist daher keine Regelung vorzusehen und auch nicht ein besonderer Betriebszustand einzuhalten.

Mit Vorteil wird die Faser- oder Fadenanordnung 1, 10 unmittelbar vor dem Aufsprühen der Suspension 30 in einem Tunnelofen 4 aufgeheizt. Durch diesen Verfahrensschritt verbessert sich die Fähigkeit der Faseranordnung 1, die Suspension 30 aufzunehmen. Ein erster Grund zu dieser Verbesserung ist die Tatsache, dass - siehe Fig. 3 - die in Zwischenräumen 13 der Faseranordnung 1 sich befindende Luft beim Aufsprühen (Pfeile 30') abgekühlt wird. Dabei erniedrigt sich dort der Luftdruck, was ein Ansaugen (Pfeile 14) der Suspension 30 in die Zwischenräume 13 bewirkt. Damit sich dieser Effekt auch tatsächlich einstellt, muss die Faser- oder Fadenanordnung 1, 10 von beiden Seiten her besprüht werden.

Es kann einen zweiten Grund für die Verbesserung der Aufnahmefähigkeit geben, der bei Vorliegen günstiger Umstände sogar wirkungsvoller ist. Dieser Grund besteht beispielsweise darin, dass auf oder in den Fasern 11 der Faser- oder Fadenanordnung 1, 10 Wasser adsorbiert ist. Beim Aufheizen im Ofen 4 wird das Wasser desorbiert; es verdrängt dabei - siehe Fig. 3 - Luft aus den Zwischenräumen 13 der Faseranordnung 1. Beim Aufsprühen 30' der Suspension 30 und dem damit verbundenen Abkühlen kondensiert das desorbierte Wasser wieder aus, was ein Ansaugen der Suspension 30 in die Zwischenräume 13 zur Folge hat.

Adsorbiertes Wasser kann in einer Schlichte 12 enthalten sein, mit der die Fasern 11 beschichtet sind. Mit Schlichten 12 beschichtete Fasern werden oft verwendet, um die Benetzbarkeit mit der Kunststoffschmelze beim Ausbilden der Matrix zu verbessern. Die Fasern 11 werden beim Aufheizen mittels des Ofens 4 auf eine Temperatur erhitzt, bei der die Schlichte 12 intakt oder weitgehend intakt bleibt. (Je nach Schlichte kann auf 120°C oder auch höher, bis auf 300°C, erhitzt werden.) In der Regel gibt es in den Schlichten 12 hydrophile Bestandteile, dank denen auch tatsächlich Wasser in den Fasern 11 enthalten ist. Die mit der Schlichte 12 gebildete Beschichtung ist meistens für Wasser nicht gut benetzbar, so dass die aufgesprühte Dispersion 30 allein aufgrund von Kapillarkräften nicht in die Faseranordnung 1 eindringt.

Die Fasern 11 der Faser- oder Fadenanordnung 1, 10 können sich bereits beim Abziehen von der Vorratsstelle 100 in einem Zustand befinden, in dem von der Substanz, die als Flüssigkeit für die Suspension verwendet wird, in adsorbierter Form vorliegt. Sie können selbstverständlich auch erst nach dem Abziehen von der Vorratsstelle 100 durch Befeuchten in einen solchen Zustand gebracht werden. Dabei kann auch relativ viel von der Flüssigkeit auf die Faser- oder Fadenanordnung 1, 10 aufgebracht werden, so dass die Fasern 1 Flüssigkeitsfilme auf ihren Oberflächen tragen.

Als Polymere für die Kunststoffmatrix werden pulverförmige Thermoplaste verwendet. Diesen können Pulver von Duroplasten und/oder anorganischen Stoffen in kleinen Mengen beigemengt sein.

Nach dem Trocknungsschritt im Ofen 51 können die Verfahrensschritte Aufheizen, Besprühen sowie Trocknen wiederholt werden, um die aufgenommene Menge an Kunststoff zu vergrössern. Es kann dies auch mehrfach wiederholt werden, bevor das Verfahren mit dem Aufschmelzen des Kunststoffs im Ofen 52 abgeschlossen wird.

## Patentansprüche

1. Verfahren zum Herstellen eines Verbundwerkstoffs aus Endlosfasern (11) und Kunststoff, wobei die Fasern als unidirektionale Faseranordnung (1) oder in Form von strangartigen, mehrfaserigen Fäden (1) vorliegen und diese Fäden eine textile Fadenanordnung (10), insbesondere ein Gewebe oder Geflecht bilden und wobei die Fasern in eine Kunststoffmatrix eingebettet werden, zu deren Herstellung ein Polymer oder verschiedene Polymere vorgesehen sind, bei welchem Verfahren die Faser- oder Fadenanordnung (1, 10) von einer Vorratsstelle, insbesondere einer Vorratsspule (100) abgezogen und mit Partikeln aus Kunststoff imprägniert wird und anschliessend zumindest ein Teil der Partikel zu der Matrix umgeschmolzen wird, wobei die Fasern oder Fäden eine verdampfbare Flüssigkeit, insbesondere Wasser enthalten, die Faser- oder Fadenanordnung (1, 10) ohne Umlenkelemente in einer Ebene geführt transportiert wird, die Partikel in einer Flüssigkeit suspendiert werden, die Suspension auf die Faser- oder Fadenanordnung aufgesprüht wird, die Faser- oder Fadenanordnung (1, 10) unmittelbar vor dem Aufsprühen der Suspension in einem Tunnelofen aufgeheizt wird, damit die enthaltene Flüssigkeit unter Verdrängung von Luft verdampft, und - in einem Trocknungsschritt (51) vor dem Umschmelzen (52) - die Flüssigkeit der aufgesprühten Suspension (30) mittels Abdampfen entfernt wird.

2. Verfahren nach Anspruch 1, **dadurch gekennzeichnet, dass** die Fasern (11) eine Oberfläche aufweisen, die für die geschmolzenen Kunststoffpartikel wesentlich besser benetzbar ist als für die Flüssigkeit der Suspension (30) und dass insbesondere die Flüssigkeit der Suspension Wasser ist.

3. Verfahren nach einem der Ansprüche 1 oder 2, **dadurch gekennzeichnet, dass** die Faser- oder Fadenanordnung (1, 10) horizontal transportiert wird und dass die Suspension (30) von oben und/oder unten, vorzugsweise von oben und unten, auf die Faser- oder Fadenanordnung aufgesprüht wird.

4. Verfahren nach einem der Ansprüche 1 bis 3, **dadurch gekennzeichnet, dass** als Polymere für die Kunststoffmatrix pulverförmige Thermoplaste verwendet werden, denen Pulver von Duroplasten und/oder anorganischen Stoffen in kleinen Mengen beigemengt sein können.

5. Verfahren nach einem der Ansprüche 1 bis 4, **dadurch gekennzeichnet, dass** die Fasern (11) der Faser- oder Fadenanordnung (1, 10) beim Abziehen von der Vorratsstelle (100) sich in einem Zustand befinden oder in einen solchen Zustand gebracht werden, in dem die Fasern von der Substanz, die als Flüssigkeit für die Suspension (30) verwendet wird, in adsorbierter Form oder als Oberflächenfilm tragen.

6. Verfahren nach einem der Ansprüche 1 bis 5, **dadurch gekennzeichnet, dass** nach dem oder einem weiteren Trocknungsschritt (51) die Verfahrensschritte Aufheizen mittels Tunnelofen (4), anschliessendes Besprühen (3) mit Suspension (30) sowie Trocknen (51) wiederholt werden.

7. Verfahren nach einem der Ansprüche 1 bis 6, **dadurch gekennzeichnet, dass** die Fasern (11) mit einer Schlichte (12) beschichtet sind und dass die Fasern beim Aufheizen mittels Tunnelofen (4) auf eine Temperatur erhitzt werden, bei der die Schlichte intakt oder weitgehend intakt bleibt.

8. Einrichtung (2) zum Durchführen des Verfahrens gemäss einem der Ansprüche 1 bis 7, folgende Komponenten umfassend: Vorratsspule (100) mit einer Faser- oder Fadenanordnung (1, 10), wobei die Fasern oder Fäden eine verdampfbare Flüssigkeit, insbesondere Wasser, enthalten; Aufsprüheinrichtung (3) mit Düsen (31, 32); Führungselementen (34) zum Führen der Faser- oder Fadenanordnung in einer Ebene; Trocknungsofen (51), Umschmelzofen (52) und Fördereinrichtung (50); ferner einen Tunnelofen (4) zwischen Vorratsspule (100) und Aufsprüheinrichtung (3), für ein Aufheizen der Faser- oder Fadenanordnung (1, 10).

## Claims

1. A method for the manufacture of a composite of continuous fibres (11) and plastic, with the fibres being present as a unidirectional thread arrangement (1) or in the form of strand-like, multi-fibrous threads (1) and these threads forming a textile thread arrangement (10), in particular a fabric or braided fabric, and with the fibres being embedded into a plastic matrix, for whose manufacture a polymer or different polymers are provided, in which method the fibre arrangement or thread arrangement (1, 10) is drawn off from a supply point, in particular a supply reel 100), and impregnated with particles of plastic and subsequently at least some of the particles are converted by melting into the matrix, wherein the fibres or threads contain an evaporable liquid, in particular water, the fibre arrangement or thread arrangement (1, 10) is transported without deflecting elements and guided in one plane, the particles are suspended in a liquid, the suspension is sprayed onto the fibre arrangement or thread arrangement, the fibre arrangement or thread arrangement (1, 10) is heated in a tunnel stove directly before the spraying on of the suspension so that that the liquid contained therein evaporates while displacing air and the liquid of the sprayed suspension (30) is removed by means of evaporation in a drying step (51) prior to the conversion melting (52).

2. A method in accordance with claim 1, **characterised in that** the threads (11) have a surface which is substantially more wettable for the melted plastic particles than for the liquid of the suspension (30) and **in that** the liquid of the suspension is in particular water.

3. A method in accordance with any one of the claims 1 or 2, **characterised in that** the fibre arrangement or thread arrangement (1, 10) is transported horizontally; and **in that** the suspension (30) is sprayed onto the fibre arrangement or thread arrangement from the top and/or bottom, preferably from the top and bottom.

4. A method in accordance with any one of the claims 1 to 3, **characterised in that** powder-like thermoplastics are used as polymers for the plastic matrix and that powders of thermosetting plastics and/or anorganic materials can be added thereto in small quantities.

5. A method in accordance with any one of the claims 1 to 4, **characterised in that** the fibres (11) of the fibre arrangement or thread arrangement (1, 10) are in a state or brought into such a state during the drawing off from the supply point (100) in which the fibres carry the substance, which is used as the liquid for the suspension (30), in adsorbed form or as a surface film.

6. A method in accordance with any one of the claims 1 to 5, **characterised in that** the process steps of heating by means of a tunnel stove (4), subsequent spraying (3) with suspension (30) and drying (51) are repeated after the drying step (51) or the further drying step (51).

7. A method in accordance with any one of the claims 1 to 6, **characterised in that** the fibres (11) are coated with a size (12) and **in that** the fibres are heated to a temperature during heating by means of a tunnel stove (4) at which the size remains intact or largely intact.

8. A device (2) for the carrying out of the method in accordance with any one of claims 1 to 7, comprising the following components: a supply reel (100) with a fibre arrangement or thread arrangement (1, 10) wherein the fibres or threads contain an evaporable liquid, in particular water; a spray device (3) with nozzles (31, 32); guide elements (34) to guide the fibre arrangement or thread arrangement in one plane; a drying stove (51), a conversion melting stove (52) and a transportation device (50); furthermore a tunnel stove (4) between the supply reel (100) and the spray device (3) for a heating of the fibre arrangement or thread arrangement (1, 10).

## Revendications

1. Procédé pour la fabrication d'un matériau à base de fibres continues (11) et d'une matière plastique, où les fibres se présentent sous la forme d'un agencement de fibres unidirectionnelles (1) ou bien sous la forme de fils (1) à plusieurs fibres, en forme de tronçons, et ces fils forment un agencement textile de fils (10), en particulier un tissu ou un tissage et où les fibres sont noyées dans une matrice de matière plastique pour la production de laquelle un polymère ou plusieurs polymères sont prévus, procédé selon lequel l'agencement de fibres ou de fils (1, 10) est retiré d'un emplacement d'approvisionnement, en particulier, une bobine d'approvisionnement (100) et est imprégné de particules de matière plastique et ensuite, au moins une partie des particules est fondue dans la matrice, où les fibres ou les fils contiennent un liquide volatilisable, en particulier de l'eau, l'agencement des fibres ou des fils (1, 10) est transporté en étant guidé dans un plan sans élément de renvoi, les particules sont mises en suspension dans un liquide, la suspension est pulvérisée sur l'agencement de fibres ou de fils, l'agencement de fibres ou de fils est chauffé directement avant pulvérisation de la suspension dans un four tunnel de façon que le liquide retenu soit vaporisé sous la pression de l'air et dans une étape de séchage (51) avant la fusion (52), le liquide de la suspension pulvérisée (30) est éliminé au moyen d'une volatilisation.

2. Procédé selon la revendication 1, **caractérisé en ce que** les fibres (11) présentent une surface qui est bien plus facilement mouillable pour les particules de matière plastique fondue que par le liquide de la suspension (30) et **en ce qu'**en particulier, le liquide de la suspension est de l'eau.

3. Procédé selon l'une quelconque des revendications 1 ou 2, **caractérisé en ce que** l'agencement des fibres ou des fils (1, 10) est transporté horizontalement et **en ce que** la suspension (30) est pulvérisée à partir du dessus et/ou du dessous, avantageusement du dessus et du dessous, sur l'agencement des fibres ou des fils.

4. Procédé selon l'une quelconque des revendications 1 à 3 **caractérisé en ce qu'**en tant que polymère pour la matrice de matière plastique, on utilise une matière thermoplastique pulvérulente, dont la poudre peut être mélangée à des matières thermodurcissables et/ou des matières inorganiques en petites quantités.

5. Procédé selon l'une quelconque des revendications 1 à 4, **caractérisé en ce que** les fibres (11) de l'agencement de fibres ou de fils (1,10), lorsqu'on les tire de l'emplacement d'approvisionnement (100), se trouvent en un état où sont portées à un état dans lequel les fibres portent la substance qui est utilisée en tant que liquide pour la suspension (30) sous forme adsorbée ou en tant que film de surface.

6. Procédé selon l'une quelconque des revendications 1 à 5, **caractérisé en ce qu'**après l'étape de séchage où lors d'une autre étape de séchage (51), les étapes du procédé, chauffage au moyen du four tunnel (4), pulvérisation subséquente (3) avec la suspension (30) ainsi que séchage (51) sont répétées.

7. Procédé selon l'une quelconque des revendications des revendications 1 à 6 **caractérisé, en ce que** les fibres (11) sont recouvertes d'un enduit (12) et **en ce que** les fibres sont chauffées par chauffage au moyen du four tunnel (4) à une température dans laquelle l'enduit reste intact ou presqu'intact.

8. Dispositif (2) pour la mise en oeuvre du procédé selon l'une quelconque des revendications 1 à 7 comprenant les composants qui suivent: bobine d'approvisionnement (100) avec un agencement de fibres ou de fils (1) où les fibres ou les fils contiennent un liquide vaporisable, en particulier, de l'eau; système de pulvérisation (3) avec des tuyères (31, 32); éléments de guidage (34) pour le guidage de l'agencement de fibres ou de fils dans un plan; four de séchage (51), four de fusion (52) et système de transport (50); de plus, un four tunnel (4) entre la bobine d'approvisionnement (100) et le système de pulvérisation (3) pour un chauffage de l'agencement de fibres ou de fils.
